# FASCICULE DE BREVET EUROPEEN

(11) **EP 3 344 690 B1**
(45) Date de publication et mention de la délivrance du brevet: **04.12.2019**
(21) Numéro de dépôt: 16760082.4
(22) Date de dépôt: 02.09.2016
(51) Int. Cl.: C08J 11/06, B09B 3/00, B09B 5/00

(54) **PROCEDE ET DISPOSITIF DE DEMONTAGE DE SYSTEMES MULTICOUCHES COMPRENANT AU MOINS UN COMPOSANT ORGANIQUE**
VERFAHREN UND VORRICHTUNG ZUR DEMONTAGE VON MEHRSCHICHTSYSTEMEN MIT MINDESTENS EINER ORGANISCHEN KOMPONENTE
METHOD AND DEVICE FOR DISMANTLING MULTILAYER SYSTEMS INCLUDING AT LEAST ONE ORGANIC COMPONENT

(30) Priorité: 03.09.2015 FR 1558185
(43) Date de publication de la demande: 11.07.2018
(73) Titulaire: Centre National de la Recherche Scientifique, 75016 Paris (FR)
(72) Inventeur: AYMONIER, Cyril, 33600 Pessac (FR); SLOSTOWSKI, Cédric, 33600 Pessac (FR)
(74) Mandataire: Lavoix
(86) Numéro de dépôt international: PCT/EP2016/070767
(87) Numéro de publication internationale: WO 2017/037260

(56) Documents cités:
- EP-A1- 1 619 227
- WO-A1-97/03802
- JP-A- H0 892 411

## Description

L'invention concerne un procédé et un dispositif permettant de démonter un système multicouche. L'invention concerne notamment un procédé de recyclage de produits multicouches comprenant au moins une couche en matériau organique.

Les systèmes ou produits multicouches interviennent dans notre vie de tous les jours avec des applications très variées. Par exemple, on les trouve dans:
- Les emballages alimentaires, tels que les briques contenant les boissons, les capsules ou les emballages de café, les pots de yaourt, etc.
- Les emballages pharmaceutiques correspondant à un assemblage plastique-aluminium,
- L'électronique, notamment l'ensemble des écrans d'ordinateurs, les Smartphones, les télévisions correspondant à un assemblage de verre et d'organiques, avec bien souvent des couches inorganiques et métalliques,
- L'électronique organique (système d'affichage, écrans, diodes électroluminescentes organiques OLEDs, modules photovoltaïques organiques qui sont constitués d'un empilement de couches de matériaux organiques de nature et de fiction diverses),
- Les panneaux solaires correspondant à des assemblages de verre, de polymères, etc.

Ces systèmes multicouches génèrent de nombreux déchets dont la mise en décharge s'avère problématique. En effet, ces déchets comportent bien souvent des matières valorisables. Or, la séparation des différentes couches du système est nécessaire afin de valoriser ou recycler séparément chacun des composants. L'un des exemples les plus parlants concerne les déchets technologiques. La mise en décharge de ces déchets à composantes électroniques pose divers problèmes, parmi lesquels on dénombre:
- La pollution due aux composantes électroniques ou organiques qui peuvent présenter des éléments toxiques, par exemple le cadmium Cd dans les panneaux solaires, le plomb dans les batteries,
- La perte de composants dont les ressources peuvent être limitées, les terres rares, par exemple, ou dont la récupération pourrait générer un gain économique, tels que les métaux nobles,
- L'occupation de l'espace due à la présence de ces déchets.

Lorsque l'on cherche à valoriser chacun des composants d'un système multicouche, il est nécessaire de procéder à une étape de désassemblage ou de séparation des différentes couches du déchet afin que chacune de ces couches puisse subir un traitement approprié.

Dans le cas des panneaux photovoltaïques à technologie silicium cristallin, on va chercher à séparer les différentes couches, la couche verre, la ou les couches organiques (polymères), le silicium cristallin et divers métaux. La séparation des différentes couches reste un problème du fait de la présence d'une couche polymérique fluorée, la face arrière, qui nécessite de prendre certaines précautions au cours du recyclage. En effet, la décomposition thermique du polymère fluoré génère d'autres composés fluorés qui sont dangereux et toxiques. La présence des polymères fluorés limite donc les procédés de recyclage puisqu'il y a un risque de formation de ces dérivés fluorés et c'est pour cela que l'on cherche à les séparer avant toute autre étape de recyclage. Ainsi, la séparation de cette couche est une priorité afin d'envisager des techniques de recyclage viables. Or, soumis à des températures relativement faibles, entre 150 et 200°C, ce polymère fluoré se dégrade en formant des composés fluorés dangereux. Ainsi, l'utilisation de procédés thermiques pour l'élimination de cette couche ne permet pas de valoriser le matériau en tant que matière première et nécessite en plus de mettre en œuvre des procédures strictes de sécurité et de recyclage des effluents gazeux.

Une manière de procéder consiste à broyer le système multicouche, ce qui permet, par exemple dans le cas d'un module photovoltaïque, de récupérer uniquement une fraction du verre. Le verre récupéré nécessite un traitement supplémentaire afin d'être réutilisé. Le recyclage des modules photovoltaïques à silicium cristallin ou PV c-Si s'arrête en général après l'étape de broyage/séparation et ne permet que de récupérer quelques métaux ainsi que du verre impur sous forme de broyât, de qualité inférieure à la qualité d'origine du matériau. De nombreuses impuretés dans ce verre broyé ne permettent pas une réutilisation en tant que verre solaire à moins de mettre en œuvre un procédé de purification à sec par exemple. Pour cela, il est possible d'exécuter une étape de purification de la surface du verre par abrasion afin d'éliminer le polluant, et obtenir un verre avec une pureté suffisante pour la revente (verre plat, qualité inférieure à la qualité d'origine du matériau). La non-récupération des cellules solaires s'avère problématique. La purification des débris de cellules solaires ainsi que la récupération des autres métaux nécessite des étapes supplémentaires de traitement chimique. Les procédés mécaniques sont assez simples à mettre en œuvre, mais restent insuffisants pour récupérer l'intégralité des matériaux valorisables du module avec un degré de pureté suffisant.

Il est aussi possible d'incinérer à haute température le module photovoltaïque afin d'éliminer les différentes couches organiques. Cette technique nécessite toutefois beaucoup d'énergie afin d'atteindre les températures requises allant de 450° à 600°C et des mesures de sécurité lourdes afin de gérer la production de composés fluorés. De plus, le verre peut subir une casse due au stress thermique durant le traitement. Les différents composés récupérés après ce traitement, verre, cellules solaires (c-Si et connexions métalliques) et métaux peuvent être pollués par les résidus organiques et donc nécessiter une ou plusieurs étapes de traitements supplémentaires. Les procédés thermiques se révèlent en général excessivement énergivores et onéreux. De plus, la récupération de matériaux purs nécessite le couplage avec un procédé mécanique ou chimique du fait des résidus d'incinération.

Une autre approche est d'utiliser l'attaque chimique des différentes couches organiques afin de récupérer le verre, les cellules solaires et les métaux. Cette technique présente de nombreux inconvénients. En effet, l'attaque chimique est réalisée en plusieurs étapes impliquant généralement des solvants toxiques et dangereux pour l'environnement, le toluène, par exemple, ainsi que des acides, l'acide sulfurique par exemple. Ces solvants et acides sont onéreux et leur utilisation entraîne la génération de nouveaux déchets du fait de leur pollution par les résidus organiques. De plus, ils peuvent également attaquer/polluer les cellules solaires et le verre, dégradant ainsi la pureté des matériaux récupérés. Les traitements chimiques présentent notamment l'inconvénient de nécessiter l'utilisation de grandes quantités de produits chimiques, tels que des acides ou des solvants, pouvant être problématiques d'un point de vue, procédé (sécurité, recyclage des solvants..), économique (prix des produits, régénération régulière..) et environnemental (création de déchets supplémentaires éventuels).

La plupart des procédés de recyclage mis en œuvre présentent donc des coûts élevés et ne permettent pas d'optimiser la récupération de chacune des couches constituant un composant ou un système multicouche comportant au moins une couche organique.

La demande de brevet WO 2012101189 propose un procédé de recyclage de modules photovoltaïques consistant à séparer des multi-matériaux en matériaux de bases. La technologie se base sur la séparation de matériaux composites à l'aide de microémulsions à base de tensio-actifs. Le principe du procédé est de réduire les tensions interfaciales entre chaque composant afin de les séparer. Plusieurs étapes sont nécessaires dans ce procédé de séparation :
- Une étape optionnelle de broyage, qui consiste à réduire la taille des matériaux afin de créer autant de surface de contact que possible pour la microémulsion, mais également pour simplifier la manipulation du matériau au cours du processus,
- Une microémulsion, les matériaux composites préalablement broyés sont traités dans la microémulsion. La séparation ou délamination est conduite sous agitation et à basse température. Au final, les fractions individuelles ou produits apparaissent dans la microémulsion,
- Une étape de lavage, lors de cette étape, les produits sont filtrés et la microémulsion est reconditionnée. Les produits sont ensuite lavés avec une eau de nettoyage qui sera elle aussi reconditionnée,
- Une étape de tri, les produits lavés sont triés à l'aide d'une procédure conventionnelle, séparation densitométrique, tamisage, etc., et obtenus individuellement,
- Une étape de séchage optionnelle, les produits peuvent être séchés, si cela s'avère nécessaire.

Ce procédé présente de nombreux intérêts économiques puisqu'il permet un haut taux de recyclage et de récupération de matériaux, pas de perte, pour un faible coût énergétique et financier (température ambiante, utilisation d'eau, ..) et permet la récupération de matériaux de haute pureté (pas de changement de phase lors du traitement). Il présente également un intérêt environnemental puisque les microémulsions mais également les eaux de lavage sont réutilisables. Néanmoins, ce procédé suppose de nombreuses étapes et les microémulsions utilisent de grandes quantités d'eau pour diminuer la proportion de tensio-actifs utilisés.

Il existe donc un besoin de disposer d'un procédé permettant de séparer de manière viable, fiable et sans danger les différentes couches d'un système multicouche afin de les valoriser individuellement tout en évitant leur dégradation. La séparation propre et nette des différentes couches d'un système comportant plusieurs couches dont au moins une couche organique reste une étape clé pour envisager une optimisation des procédés de recyclage et de valorisation. Ainsi, le fait de pouvoir récupérer le verre d'origine dans le cas des modules photovoltaïques présente un intérêt économique bien supérieur à la récupération d'un verre pollué qui ne pourra être réutilisé que pour des applications d'isolation par exemple.

Un système multicouche selon l'invention est un matériau composite constitué d'un empilement de couches inorganiques et /ou organiques dont au moins une couche organique. La liaison entre deux couches successives dans le système peut être assurée par une couche de colle mais l'interface peut aussi être de nature chimique, par exemple obtenue par l'activation d'une surface de verre pour qu'elle réagisse avec une couche organique lors de l'assemblage du système multicouche. Lors du procédé on pourra, par le choix des paramètres de traitement température, pression et aussi le choix des fluides, choisir de désolidariser soit chaque couche unitairement, soit des sous-ensembles de couches selon les besoins. Une couche peut elle-même être constituée de plusieurs composants.

Le procédé selon l'invention repose sur une nouvelle approche pour séparer au moins les différentes couches ou des sous-ensembles de couches d'un système multicouche en utilisant un fluide composé d'un gaz et d'un mélange de liquides non réactifs dans les conditions ambiantes de température et de pression (25 °C et 0,1 MPa) et à le porter en température et en pression, et particulièrement en milieu supercritique. L'expression mélange de liquides sera utilisée pour désigner un liquide ou plusieurs liquides non réactifs mélangés dans des proportions variables, les liquides ayant notamment pour fonction de séparer les couches sans affecter les composants.

L'invention concerne un procédé de délamination/démontage de systèmes multicouches SM conformément à la revendication 1.

Il est possible de mettre en œuvre le procédé avec une température comprise entre 30°C et 150°C et une pression comprise entre 5MPa et 50MPa.

Le fluide utilisé est un mélange CO₂/eau/acétone avec une proportion d'eau par rapport à l'acétone variant de 0 à 100%.

La température de traitement peut être comprise entre 60°C et 130°C.

Le procédé peut être utilisé pour le traitement de système multicouche, par exemple, un module photovoltaïque comprenant une couche fluorée, un emballage, un composant électronique organique.

Le procédé peut comporter une étape de prédécoupe des systèmes multicouches et une étape de rinçage et de séchage des couches ou des sous-ensembles de couches séparés.

L'invention concerne aussi un dispositif de délamination/démontage de systèmes multicouches conformément à la revendication 7.

Selon une variante de réalisation, le dispositif comporte un réservoir de gaz relié à un dispositif de refroidissement via un premier conduit, une pompe haute pression, dont la sortie est reliée à un préchauffeur, qui lui-même est en liaison avec une première vanne équipant un conduit d'introduction du gaz relié à la première entrée, un conduit d'évacuation du gaz vers une enceinte.

Le dispositif peut aussi comporter une ou plusieurs lignes d'introduction de liquides reliée(s) à une deuxième entrée du réacteur, une ligne comprenant au moins un deuxième conduit équipé d'une troisième vanne de régulation, une pompe qui reçoit le mélange de liquides stocké dans un réservoir, un circuit de vidange relié à une deuxième sortie du réacteur reliée à un conduit équipé d'une troisième vanne et d'un réservoir ou d'un tuyau de vidange.

D'autres caractéristiques et avantages de la présente invention apparaîtront mieux à la lecture de la description d'exemples de réalisation donnés à titre illustratif et nullement limitatifs, annexée des figures qui représentent :
- La figure 1, une structure d'un module photovoltaïque,
- La figure 2, un exemple de dispositif pour la mise en œuvre du procédé selon l'invention,
- La figure 3a une représentation d'un module photovoltaïque et les figures 3b et 3c, le résultat de la séparation mécanique des couches de la face arrière ou « Backsheet » d'un module photovoltaïque, par le fluide CO₂/acétone,

- Les figures 4a et 4b, le résultat de la séparation mécanique de la Backsheet d'un module photovoltaïque, par un fluide CO₂/eau/acétone,
- Les figures 5a et 5b, le résultat de la séparation mécanique des couches de la Backsheet d'un module photovoltaïque, par un fluide CO₂/eau/acétone.

Afin de bien faire comprendre les étapes et le fonctionnement du procédé selon l'invention, l'exemple qui suit est donné dans le cadre d'un démontage d'un module photovoltaïque. Il existe différentes technologies de modules photovoltaïques. Les modules photovoltaïques à base de silicium cristallin dominent sur le marché des modules photovoltaïques. Ces modules photovoltaïques à technologie c-Si sont des systèmes multicouches dont le recyclage et la valorisation nécessitent la séparation des différentes couches afin d'en extraire les matériaux d'intérêts.

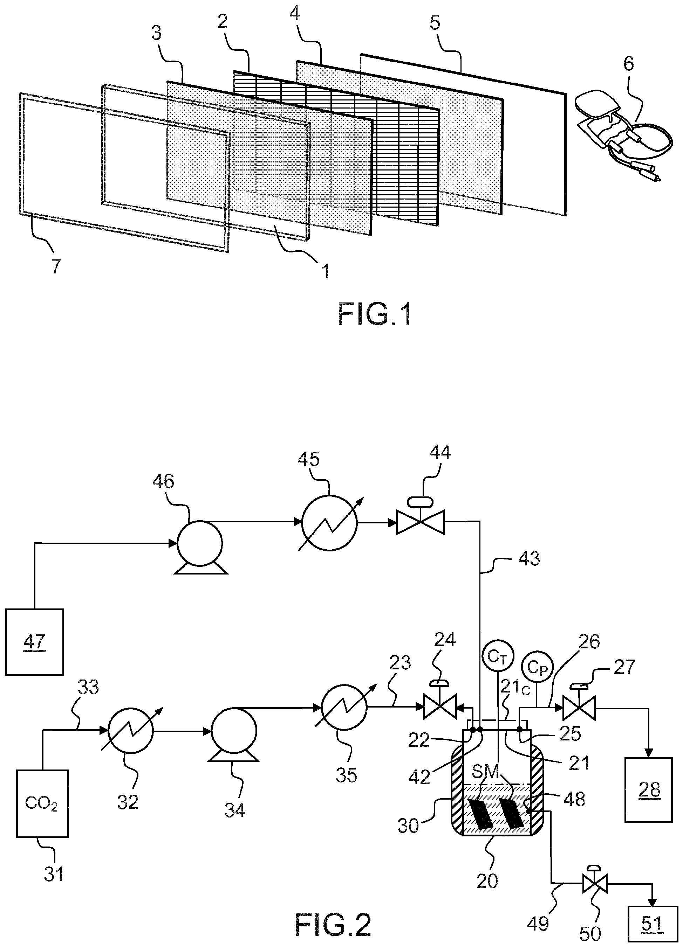

Un exemple de module photovoltaïque à technologie silicium cristallin représenté à la figure 1 est un assemblage multicouche comprenant à la fois des composantes organiques, polymères encapsulant et de face arrière et inorganiques, verre, silicium cristallin et métaux (Ag, Cu, Al..). La composition classique de ces modules est la suivante :
- Une face avant en verre solaire, 1, plus connue sous le terme anglo-saxon de Frontsheet,
- Un ensemble de plusieurs cellules solaires en c-Si et de métaux permettant d'assurer les jonctions électriques (Ag, Cu, Sn, ..), 2, le tout encapsulé entre deux couches d'éthylène-acétate de vinyle (EVA-encapsulant), 3 et 4,
- Une face arrière ou Backsheet, 5, qui peut être en verre mais qui est majoritairement composée d'un assemblage de couches polymériques comportant au moins une couche de polymère fluoré (Polyfluorure de vinyle PVF ou Polyfluorure de vinylidène PVDF),
- Un boîtier de jonction 6 afin de faire le lien électrique entre le réseau domestique et le module photovoltaïque PV,
- Un cadre en aluminium 7 entourant le module photovoltaïque PV.

La présence de polymères fluorés dans la Backsheet représente aujourd'hui un verrou technologique pour le recyclage des différentes couches. En effet, la décomposition thermique des polymères fluorés, tels que le PVF ou le PVDF, entraîne la génération de composés fluorés toxiques et dangereux à la fois pour l'opérateur, l'environnement et le procédé.

La figure 2 schématise un premier exemple de dispositif pour la mise en œuvre du procédé selon l'invention. Dans cet exemple, on utilise, par exemple, un fluide gaz/liquide ou gaz/mélange de liquides, le gaz pouvant être du dioxyde de carbone CO₂ dans des conditions supercritiques, Tc, Pc. Les liquides sont des liquides non réactifs qui présentent la particularité de désolidariser les couches. Le système multicouche SM, par exemple un module photovoltaïque, à traiter est introduit dans un réacteur 20 par une première entrée 21 pourvue de moyens de fermeture 21c vérifiant une étanchéité et une tenue à la mise en pression. Le réacteur 20 comporte aussi une deuxième entrée 22 reliée à un premier conduit d'introduction 23 muni d'une première vanne 24 pour l'introduction du dioxyde de carbone CO₂ par exemple. Le réacteur comporte une première sortie 25 reliée à un premier conduit d'évacuation 26 muni aussi d'une deuxième vanne 27 permettant la récupération du CO₂ en fin de procédé, dans un container 28 par exemple. Des capteurs de température C_{T} et de pression Cp équipent le réacteur et le conduit d'évacuation pour le contrôle du déroulement du procédé. Un collier en céramique 30 en contact direct avec le réacteur 20 permet la mise en chauffe du réacteur. Tout dispositif permettant la mise en température du réacteur pourrait être utilisé, par exemple un four, des résistantes chauffantes, etc.

En amont du réacteur 20, le dioxyde de carbone ou tout autre gaz utilisé lors du procédé peut être stocké dans une bouteille non représentée, ou encore par l'intermédiaire d'un circuit comprenant un réservoir de CO₂, 31, relié à un dispositif de refroidissement 32 via un premier conduit 33, une pompe haute pression 34, dont la sortie est reliée à un préchauffeur 35, qui lui-même est en liaison avec la première vanne 24.

Le mélange de liquides peut être introduit directement dans le réacteur 20 avec le système multicouche à traiter. Pour cela, une ou plusieurs lignes d'introduction de liquides ou de mélange de liquides peuvent équiper le dispositif.

Sur la figure 2 à titre d'exemple, on a représenté une ligne permettant l'introduction d'un mélange de liquides dans le réacteur 20. La ligne d'introduction est reliée à une deuxième entrée 42 du réacteur 20. Elle comprend un deuxième conduit 43 équipé d'une troisième vanne de régulation 44, un préchauffeur optionnel 45, positionné en aval d'une pompe 46, qui reçoit le mélange de liquides stocké dans un réservoir 47. L'évacuation de ce mélange de liquides, est effectuée par un circuit de vidange relié à une deuxième sortie 48 du réacteur 20 reliée à un conduit d'évacuation 49 équipé d'une vanne 50 et d'un réservoir ou d'un tuyau de vidange 51. Sans sortir du cadre de l'invention, il serait aussi possible d'équiper le dispositif avec plusieurs lignes d'introduction de liquides, le mélange s'effectuant alors au sein du réacteur 20. Par exemple, pour injecter de l'eau et de l'acétone, on utilisera deux lignes séparées pour les introduire dans le réacteur.

Les modules photovoltaïques PV sont placés directement dans le réacteur 20 avec le mélange de liquides, par exemple. On ferme ensuite le réacteur et on injecte le CO₂. Le préchauffeur 35 facilite la montée en température du milieu CO₂. La présence de la pompe haute pression 34 couplée au cryostat 33 permet d'atteindre des pressions plus élevées, on s'assure ainsi que le CO₂ est à l'état liquide. Une fois les paramètres de traitement atteints, la température Tr et la pression Pr, un pallier est réalisé durant une période prédéterminée. A la fin de ce palier, le système est refroidi, puis une dépressurisation est réalisée avant l'ouverture du réacteur. Les différentes couches séparées du système multicouche sans dégradation et le mélange de liquides sont ensuite récupérés. Les couches ou le sous-ensemble de couches séparés en fin de procédé sont par la suite rincés à l'eau et séchés à l'air (température ambiante, air comprimé ou naturel), par exemple, afin d'éliminer les résidus liquides. Il sera aussi possible d'introduire le mélange de liquides permettant un traitement en continu grâce aux circuits d'introduction de liquide décrits précédemment.

Le gaz utilisé pour la mise en œuvre du procédé remplit par exemple trois fonctions, simultanément ou non:
- Il permet d'augmenter et de maintenir la pression du système en jouant sur le volume et la température du gaz,
- Il génère un gonflement des matériaux organiques afin de faciliter la diffusion du mélange de liquides dans le composé multicouche,
- Il permet de désolidariser soit chaque couche unitairement soit des sous-ensembles de couches composant le système multicouche.

Le mélange de liquides non réactifs sera choisi pour sa capacité à désolidariser soit chaque couche unitairement soit des sous-ensembles de couches composant le système multicouche, en complément de l'action du gaz, quelle que soit la fonction remplie par ce dernier suivant la définition ci-dessus, ceci sans modification des composants d'intérêts du système multicouche. La proportion volumique du mélange liquide par rapport au gaz sera d'au moins à 15%.

Dans le cas de présence de colle assurant le maintien entre les couches, le mélange de liquides permettra la dissolution et/ou l'extraction des colles sans modification des composants d'intérêts.

Les conditions de pression Pr et de température Tr pour réaliser le traitement seront par exemple choisies dans les gammes suivantes; la plage de température [31°C, 150°C]; la plage de pression Pr [5 MPa, 50 MPa]. La valeur de la température Tr, à laquelle on porte le réacteur, sera choisie à une valeur inférieure à la température Tg de dégradation des composants constituant une couche du système multicouche.

Le mélange de liquides ou fluide mélangé au CO₂ comportera par exemple de l'éthanol, de l'acétone, de l'eau, etc., tout fluide non réactif ayant pour action de désolidariser, soit chaque couche unitairement, soit des sous-ensembles de couches composant le système multicouche en complément de l'action du CO₂ au niveau de l'interface des couches constituant le système multicouche. La proportion volumique de ce mélange de liquides au sein du fluide gaz/mélange de liquides sera au moins égale à 15%.

Le mélange de liquides utilisé pour le traitement comprend, par exemple, de l'acétone, et la valeur de la température de traitement Tr est modérée, par exemple 90°C, comprise entre 30°C et 150°C.

Le procédé selon l'invention peut fonctionner en ligne, en continu ou encore en batch. Dans le cas d'un fonctionnement en ligne, les étapes ou phases de mise en température et pression, d'introduction et de « vidage » des composants récupérés seront réalisés selon des principes connus de l'homme du métier.

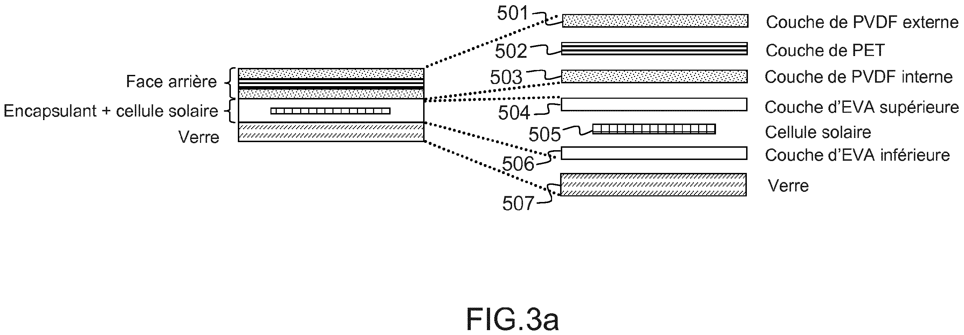

La figure 3a donne un exemple de la structure d'un module photovoltaïque. Le module est composé d'une première couche de PVDF externe 501, d'une deuxième couche de Polyéthylène Téréphtalate ou PET 502, d'une troisième couche PVDF interne 503, d'une couche d'éthylène-vinyl acétate ou EVA supérieure 504, de la cellule solaire 505, d'une couche d'EVA inférieure 506 et d'une couche de verre 507.

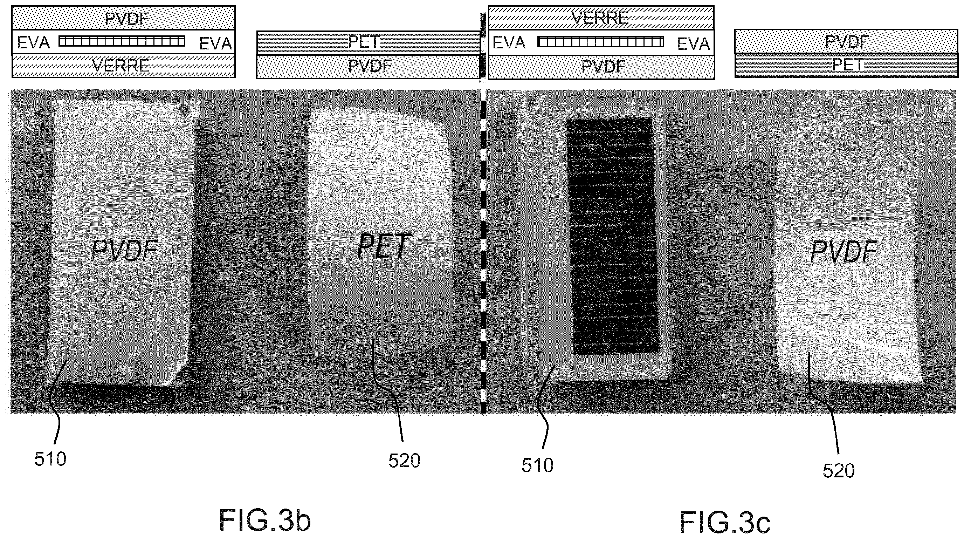

Les figures 3b et 3c illustrent la séparation mécanique des couches de la Backsheet dans le cas d'une application à un module photovoltaïque, après traitement en mélange CO₂/acétone. La figure 3b montre la face verre vers le bas, la figure 3c, la face verre vers le haut. Les trois couches de la Backsheet ont aussi été représentées pour une meilleure compréhension. La Backsheet KPK est un film tri-couches, composé d'une couche de PVDF (Kynar® commercialisé par la société Arkema), d'une couche de PET et d'une couche de PVDF (Kynar®). Lors de la séparation mécanique du système multicouche, on récupère donc d'un côté un ensemble 510 verre/EVA/cellule solaire/EVA/ Kynar® et de l'autre 520 un ensemble PET/ Kynar®. La cellule solaire reste intacte, encapsulée dans l'EVA formant un ensemble verre/EVA/ cellule solaire/EVA, l'EVA étant séparable du verre. Par attaque chimique, il est ensuite possible de récupérer la cellule solaire.

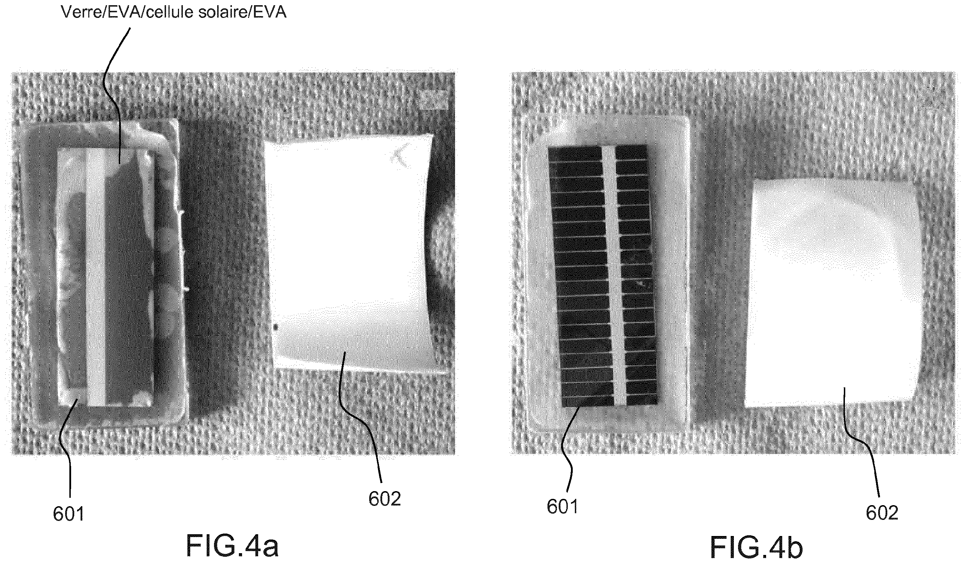

Le fluide est un mélange CO₂/eau/acétone. La température Tr est par exemple de 90°C. Les figures 4a et 4b schématisent le système multicouche après traitement. La figure 4a correspond à la face verre vers le bas et la figure 4b à la face verre vers le haut. On remarque la séparation de la Backsheet fluorée 602 du reste du module photovoltaïque 601 verre/EVA/cellule solaire/EVA. La quantité de mélange de liquides dans le fluide CO₂/eau/acétone est, par exemple de 15%, et le rapport de l'eau par rapport à l'acétone peut varier de 0 à 100%.

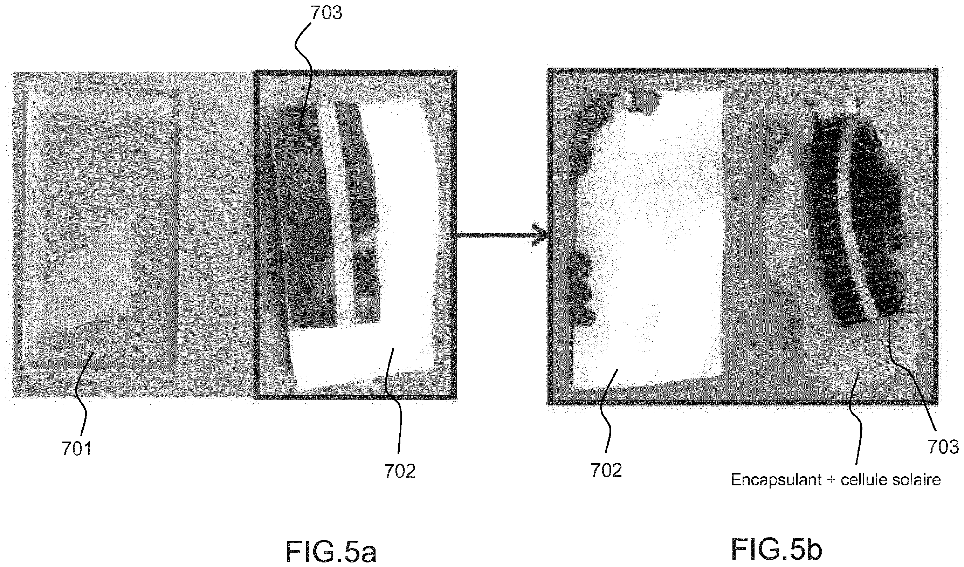

Les figures 5a et 5b représentent le résultat obtenu pour une température Tr de 120°C avec le même mélange CO₂/eau/acétone. Il est alors possible de séparer mécaniquement l'ensemble des couches du module. Le verre 701 est séparé simplement et de manière nette du reste 702 du système multicouche. La température Tr pourrait être choisie par exemple entre 90°C et 120°C. L'étape suivante consiste, par exemple, à séparer mécaniquement l'ensemble des couches du module photovoltaïque. Le traitement entraîne simultanément une séparation des couches composant la Backsheet 702 et de l'ensemble 703 composé de l'encapsulant de la cellule solaire et de la cellule solaire.

Ces trois dernières variantes de réalisation explicitées permettent de démonter entièrement un module PV à l'aide d'un mélange CO₂/eau/acétone, sans déchet ni dégradation des couches de PVDF ou de Kynar® via une optimisation de la température entre 90° et 120°C.

Dans le cas de recyclage de modules photovoltaïques à Backsheet non fluorée, la température Tr peut être choisie égale à 60°C. Le traitement se fera en présence de CO₂ à 60°C ou en présence d'un mélange CO₂/eau à 90°C, ceci permettant de séparer la Backsheet. L'utilisation d'un mélange CO₂/eau/acétone à 120°C permettra la séparation de la Backsheet et la récupération du verre. Sans sortir du cadre de l'invention, il est possible de travailler à des températures plus basses, de l'ordre de 60°C, 90°C, par exemple, notamment pour le mélange CO₂/eau/acétone.

De manière générale les paramètres de fonctionnement du procédé selon l'invention seront les suivants :
- Une température Tr comprise entre une température minimale Tₘᵢₙ choisie afin de dépasser la température critique du gaz utilisé, par exemple 31°C pour le CO₂, et une température maximale Tₘₐₓ choisie pour conserver les composants du système, ne pas les dégrader, 150°C pour les systèmes PV c-Si à Backsheet fluorée, par exemple,
- Une pression Pr, fixée au-delà de la pression critique du gaz, par exemple le CO₂,
- Un temps de palier en température qui est fonction de la nature et de la taille des déchets, et aussi des équipements ; le temps de palier peut être nul, le temps de montée/descente à la température choisie sont choisis de manière à assurer la séparation,
- Une composition volumique de mélange gaz/liquide(s), la proportion volumique du mélange de liquides par rapport au gaz sera d'au moins à 15%, avec par exemple de l'eau et de l'acétone pour le mélange de liquides. Les proportions volumiques des constituants du mélange de liquides, mélange acétone-eau, par exemple avec des proportions volumiques de 80 % d'acétone et 20 % d'eau, ou encore avec une proportion d'eau variant de 0 à 100% par rapport à l'acétone.

Le procédé décrit précédemment peut être mis en œuvre dans le recyclage de nombreux systèmes multicouches. Le système multicouche est par exemple un déchet d'emballage cosmétique composé d'une couche de polymère recouverte par un ou plusieurs métaux. Il est aussi possible de traiter des déchets d'emballage pharmaceutique composé d'une couche de plastique et d'un film d'aluminium, le traitement permettant une séparation nette des couches.

Le procédé est aussi employé pour recycler des déchets, par exemple :
- Emballage de chewing-gum comportant un assemblage de couches organiques et d'une couche d'aluminium, pour obtenir séparément l'aluminium et les couches organiques sans besoin d'une action mécanique,
- Emballage de gourde de compote sans connaissance a priori de la nature des couches, conduisant à la séparation des différentes couches, couche organique, couche d'aluminium et autre couche organique,
- Emballage de crème fraiche composé d'un ensemble PE/carton/PE/aluminium/PE/PE, etc.,

Le procédé peut aussi être utilisé pour séparer les couches présentes dans des cellules PV c-SI, diodes électroluminescentes organiques OLEDs, des dispositifs d'affichage, etc.

Pour le traitement de ces déchets, on prédécoupe, par exemple, ces déchets avant de les soumettre aux deux traitements décrits précédemment :
- Un traitement en CO₂ supercritique à 90° et 15MPa,
- Un traitement dans un mélange CO₂/eau/acétone à 105°C et 18MPa.

L'étape de prédécoupe permet notamment de favoriser et/ou permettre l'accès du fluide gaz/mélange de liquides aux interfaces des différentes couches du système et donc la séparation des couches. Ceci entraîne notamment une diminution des temps de traitement. Elle permet aussi de manipuler plus facilement les systèmes multicouches.

Pour le traitement de déchets d'emballage cosmétique, composé d'un film plastique recouvert d'un dépôt de métaux, il est possible de récupérer en solution les métaux présents sur le déchet d'emballage cosmétique.

Dans le cas de traitement d'emballage pharmaceutique, le procédé permet de récupérer l'aluminium.

Le traitement des emballages de compote conduira à la séparation des couches organiques de l'aluminium.

Afin de minimiser les coûts énergétiques liés au procédé, et d'éviter une décomposition thermique de certains composants des couches, la température de fonctionnement sera au maximum égale à 150°C, en dessous de la température Tg de dégradation des composés. De cette façon, il est possible de traiter des systèmes multicouches comportant au moins une couche organique qui risquerait de générer des composés toxiques ou dangereux pour l'environnement, comme le polymère fluoré, de type PVF, PVDF. Cette valeur de température ne limite pas l'utilisation du procédé à des températures plus élevées si la séparation des couches du système le requiert.

Le procédé selon l'invention permet avantageusement de récupérer les différents composants d'un système multicouche sans détériorer l'environnement ou au moins en minimisant l'impact sur l'environnement. Il trouve son utilisation dans de nombreux domaines, déchets ménagers, déchets électroniques.

Le procédé selon l'invention permet notamment de récupérer aisément du verre en conservant à la fois ses propriétés optiques et chimiques de surface.

## Revendications

1. Procédé de délamination/démontage de systèmes multicouches SM comportant plusieurs couches dont au moins une couche organique, les couches étant séparées par des interfaces, **caractérisé en ce qu'**il comporte au moins les étapes suivantes :
• Mélanger le système multicouche avec un fluide composé d'au moins un gaz présentant la particularité de provoquer le gonflement d'au moins une des couches et d'un ou plusieurs liquides non réactifs ayant la particularité de permettre la désolidarisation de chaque couche unitairement ou de sous-ensembles de couches composant le système multicouche sans dégradation des constituants des couches, le fluide gaz/liquides étant porté en température et en pression,
• Récupérer séparément au moins une ou plusieurs couches ou un sous-ensemble de couches non dégradées ;
**en ce que** le fluide est un mélange CO₂/eau/acétone,
et **en ce que** la valeur de la température Tr du traitement est choisie supérieure à la température critique Tc du gaz et inférieure à la température de dégradation Tg des couches du système multicouche, la valeur de pression Pr de traitement est choisie supérieure à la pression critique Pc du gaz et la proportion volumique de mélange de liquides par rapport au gaz est au moins de 15%.

2. Procédé selon la revendication 1 **caractérisé en ce que** l'on opère avec une température comprise entre 30°C et 150°C et une pression comprise entre 5MPa et 50MPa.

3. Procédé selon l'une des revendications 1 à 2 **caractérisé en ce que** le fluide est un mélange CO₂/eau/acétone avec des proportions volumiques de 80 % d'acétone et 20 % d'eau.

4. Procédé selon la revendication 3 **caractérisé en ce que** la température est comprise entre 60°C et 130°C.

5. Procédé selon l'une des revendications 1 à 4 **caractérisé en ce que** le système multicouche est un module photovoltaïque comprenant une couche fluorée, un emballage, un composant électronique organique.

6. Procédé selon l'une des revendications 1 à 5 **caractérisé en ce qu'**il comporte une étape de prédécoupe des systèmes multicouches et une étape de rinçage et de séchage des couches ou des sous-ensembles de couches séparés.

7. Dispositif de délamination/démontage de systèmes multicouches comportant plusieurs couches dont au moins une couche organique, les couches étant séparées par des interfaces, **caractérisé en ce qu'**il comporte en combinaison au moins les éléments suivants :
• Un réacteur (20) comprenant au moins :
• une première entrée (21) pour l'introduction d'au moins le système multicouche SM, une deuxième entrée (22) pour l'introduction d'un fluide composé d'au moins un gaz présentant la particularité de provoquer le décollement des couches, et au moins une entrée (21, 42) d'un liquide ou d'un mélange de liquides non réactifs, le fluide étant un mélange CO₂/eau/acétone,
• une première sortie (25) pour la récupération du gaz en fin de procédé,
et dans lequel la valeur de la température Tr du traitement est choisie supérieure à la température critique Tc du gaz et inférieure à la température de dégradation Tg des couches du système multicouche, la valeur de pression Pr de traitement est choisie supérieure à la pression critique Pc du gaz et la proportion volumique de mélange de liquides par rapport au gaz est au moins de 15% ;
• un dispositif de mise en température (30) du réacteur (20), pour conduire à la mise en température du fluide gaz/mélange de liquide.

8. Dispositif selon la revendication 7 **caractérisé en ce qu'**il comporte un réservoir de gaz (31) relié à un dispositif de refroidissement (32) via un premier conduit (33), une pompe haute pression (34), dont la sortie est reliée à un préchauffeur (35), qui lui-même est en liaison avec une première vanne (24) équipant un conduit d'introduction du gaz relié à la première entrée (22), un conduit d'évacuation du gaz (26) vers une enceinte (28).

9. Dispositif selon l'une des revendications 7 ou 8 **caractérisé en ce qu'**il comporte une ou plusieurs lignes d'introduction de liquides reliée à une deuxième entrée (42) du réacteur (20), une ligne comprenant au moins un deuxième conduit (43) équipé d'une troisième vanne de régulation (44), une pompe (46), qui reçoit le mélange de liquides stocké dans un réservoir (47), un circuit de vidange relié à une deuxième sortie (48) du réacteur (20) reliée à un conduit (49) équipé d'une vanne (50) et d'un réservoir ou d'un tuyau de vidange (51).

## Patentansprüche

1. Verfahren zur Delamination/Zerlegung von Mehrschichtsystemen SM, welche mehrere Schichten aufweisen, darunter wenigstens eine organische Schicht, wobei die Schichten durch Schnittstellen getrennt sind, **dadurch gekennzeichnet, dass** es wenigstens die folgenden Schritte aufweist:
• Mischen des Mehrschichtsystems mit einem Fluid, das zusammengesetzt ist aus wenigstens einem Gas, welches die Eigenschaft aufweist, die Anschwellung von wenigstens einer der Schichten zu verursachen, und aus einer oder mehreren, nicht-reaktiven Flüssigkeiten, die die Eigenschaft haben, die Trennung von jeder Schicht einzeln oder von Untereinheiten von Schichten, aus denen das Mehrschichtsystem zusammengesetzt ist, ohne Degradierung der Bestandteile der Schichten zu ermöglichen, wobei das Gas/Flüssigkeiten-Fluid auf Temperatur und Druck gebracht wird,
• Gesondertes Rückgewinnen von wenigstens einer oder mehrerer Schichten oder einer Untereinheit von Schichten, die nicht degradiert sind,
dass das Fluid eine CO₂/Wasser/Aceton-Mischung ist
und dass der Wert der Temperatur Tr der Behandlung ausgewählt ist oberhalb der kritischen Temperatur Tc des Gases und unterhalb der Temperatur der Degradierung Tg der Schichten des Mehrschichtsystems, wobei der Wert des Drucks Pr der Behandlung ausgewählt ist oberhalb des kritischen Drucks Pc des Gases und wobei der Mischung-Volumenanteil der Flüssigkeiten bezüglich des Gases wenigstens 15% ist.

2. Verfahren gemäß Anspruch 1, **dadurch gekennzeichnet, dass** man es mit einer Temperatur zwischen 30°C und 150°C und einem Druck zwischen 5MPa und 50MPa durchführt.

3. Verfahren gemäß einem der Ansprüche 1 bis 2, **dadurch gekennzeichnet, dass** das Fluid eine CO₂/Wasser/Aceton-Mischung mit Volumenanteilen von 80% Aceton und 20% Wasser ist.

4. Verfahren gemäß Anspruch 3, **dadurch gekennzeichnet, dass** die Temperatur zwischen 60°C und 130°C ist.

5. Verfahren gemäß einem der Ansprüche 1 bis 4, **dadurch gekennzeichnet, dass** das Mehrschichtsystem ein Photovoltaikmodul ist, das eine fluorierte Schicht, ein Packmittel, einen organischen, elektronischen Bestandteil aufweist.

6. Verfahren gemäß einem der Ansprüche 1 bis 5, **dadurch gekennzeichnet, dass** es einen Schritt des Zuschneidens der Mehrschichtsysteme und einen Schritt des Spülens und des Trocknens der Schichten oder der Untereinheiten der getrennten Schichten aufweist.

7. Vorrichtung zur Delamination/Zerlegung von Mehrschichtsystemen, welche mehrere Schichten aufweisen, darunter wenigstens eine organische Schicht, wobei die Schichten durch Schnittstellen getrennt sind, **dadurch gekennzeichnet, dass** sie in Kombination wenigstens die folgenden Elemente aufweist:
• einen Reaktor (20), der wenigstens aufweist:
• einen ersten Eingang (21) zur Einführung von wenigstens dem Mehrschichtsystem SM, einen zweiten Eingang (22) zur Einführung eines Fluid, das zusammengesetzt ist aus wenigstens einem Gas, das die Eigenschaft hat, die Ablösung der Schichten zu verursachen, und wenigstens einen Eingang (21, 42) einer Flüssigkeit oder einer Mischung aus Flüssigkeiten, die nicht-reaktiv sind, wobei das Fluid eine CO₂/Wasser/Aceton-Mischung ist,
• einen ersten Ausgang (25) zur Rückgewinnung des Gases am Ende des Verfahrens,
und wobei der Wert der Temperatur Tr der Behandlung ausgewählt ist oberhalb der kritischen Temperatur Tc des Gases und unterhalb der Temperatur der Degradierung Tg der Schichten des Mehrschichtsystems, wobei der Wert des Drucks Pr der Behandlung ausgewählt ist oberhalb des kritischen Drucks Pc des Gases und der Mischung-Volumenanteil der Flüssigkeiten bezüglich des Gases wenigstens 15% ist,
• eine Vorrichtung zum in-Temperatur-Bringen (30) des Reaktors (20), um das in-Temperatur-Bringen des Gas/Flüssigkeiten-Mischung-Fluid herbeizuführen.

8. Vorrichtung gemäß Anspruch 7, **dadurch gekennzeichnet, dass** sie aufweist ein Gas-Reservoir (31), das über einen ersten Kanal (33) mit einer Vorrichtung zur Abkühlung (32) verbunden ist, eine Hochdruckpumpe (34), deren Ausgang mit einem Vorwärmer (35) verbunden ist, der seinerseits in Verbindung mit einem ersten Ventil (24) ist, mit welchem ein Kanal ausgestattet ist zur Einführung des Gases, der mit dem ersten Eingang (22) verbunden ist, eine Leitung zur Evakuierung des Gases (26) in Richtung zu einem Behälter (28).

9. Vorrichtung gemäß einem der Ansprüche 7 oder 8, **dadurch gekennzeichnet, dass** sie aufweist eine oder mehrere Leitungen zur Einführung von Flüssigkeiten, die mit einem zweiten Eingang (42) des Reaktors (20) verbunden ist, wobei eine Leitung wenigstens einen zweiten Kanal (43), der mit einem dritten Ventil zur Regulierung (44) ausgestattet ist, aufweist, eine Pumpe (46), welche die in einem Reservoir (47) bevorratete Flüssigkeiten-Mischung empfängt, einen Entleerungskreis, der mit einem zweiten Ausgang (48) des Reaktors (20) verbunden ist, der mit einem Kanal (49) verbunden ist, welcher mit einem Ventil (50) und einem Reservoir oder einem Entleerungsrohr (51) ausgestattet ist.

## Claims

1. Method of delamination/dismantling multilayer systems SM comprising several layers including at least one organic layer, wherein the layers are separated by interfaces, **characterized in that** it comprises at least the following steps:
- Mixing the multilayer system with a fluid comprising at least one gas having the particularity of causing the swelling of at least one of the layers and one or more non-reactive liquids having the particularity of allowing the separation of each layer unitarily or of subsets of layers composing the multilayer system without degradation of the constituents of the layers, the gas/liquid fluid being raised in temperature and pressure,
- Recovering separately at least one or more layers or a subset of undegraded layers;
**in that** the fluid is a mixture of CO₂/water/acetone,
and **in that** the value of the treatment temperature Tr is chosen to be greater than the critical temperature Tc of the gas, and lower than the degradation temperature Tg of the layers of the multilayer system, the treatment pressure value Pr is chosen to be higher than the critical pressure Pc of the gas and the volume proportion of a mixture of liquids with respect to the gas is at least 15%.

2. Method according to claim 1 **characterized in that** it is operated with a temperature between 30°C and 150°C and a pressure between 5MPa and 50MPa.

3. Method according to one of the claims 1 to 2 **characterized in that** the fluid is a mixture of CO₂/water/acetone with a volume proportion of 80% of acetone and 20% of water.

4. Method according to claim 3 **characterized in that** the temperature lies between 60°C and 130°C.

5. Method according to one of the claims 1 to 4 **characterized in that** the multilayer system is a photovoltaic module comprising a fluorinated layer, a packaging, an organic electronic component.

6. Method according to one of the claims 1 to 5 **characterized in that** it comprises a precutting step of the multilayer systems and a step of rinsing and drying the layers or subsets of separate layers.

7. Device for delamination/dismantling multilayer systems comprising several layers including at least one organic layer, the layers being separated by interfaces, **characterized in that** it comprises at least the following elements in combination:
- A reactor (20) comprising at least:
o A first inlet (21) for the introduction of at least the multilayer system SM, a second inlet (22) for the introduction of a fluid comprising at least one gas having the characteristic of causing the separation of the layers, and at least one inlet (21, 42) for a liquid or a mixture of non-reactive liquids, the fluid being a mixture of CO₂/water/acetone,
o A first outlet (25) for recovering the gas at the end of the method,
and **in that** the value of the treatment temperature Tr is chosen to be greater than the critical temperature Tc of the gas, and lower than the degradation temperature Tg of the layers of the multilayer system, the treatment pressure value Pr is chosen to be higher than the critical pressure Pc of the gas and the volume proportion of a mixture of liquids with respect to the gas is at least 15%,
- A temperature setting device (30) of the reactor (20), to raise the temperature of the gas/liquid mixture.

8. Device according to claim 7 **characterized in that** it comprises a gas reservoir (31) connected to a cooling device (32) via a first conduit (33), a high pressure pump (34) whose output is connected to a preheater (35), which itself is connected to a first valve (24) equipping a gas introduction conduit connected to the first inlet (22), a gas evacuation conduit (26) towards an enclosure (28).

9. Device according to one of the claims 7 or 8 **characterized in that** it comprises one or more lines for introducing liquids connected to a second inlet (42) of the reactor (20), a line comprising at least a second conduit (43) equipped with a third control valve (44), a pump (46) which receives the liquid mixture stored in a reservoir (47), a drain circuit connected to a second outlet (48) of the reactor (20) that is connected to a conduit (49) equipped with a valve (50) and a reservoir or drain pipe (51).
